# EUROPEAN PATENT SPECIFICATION

(11) **EP 2 235 702 B1**
(45) Date of publication and mention of the grant of the patent: **28.09.2011**
(21) Application number: 08863578.4
(22) Date of filing: 19.12.2008
(51) Int. Cl.: G08B 13/14

(54) **ANTI-THEFT DEVICE, PARTICULARLY FOR PALLETS LOADED WITH GOODS**
ANTIDIEBSTAHLEINRICHTUNG, INSBESONDERE FÜR MIT WAREN BELADENE PALETTEN
DISPOSITIF ANTIVOL, EN PARTICULIER POUR PALETTES CHARGÉES DE MARCHANDISES

(30) Priority: 21.12.2007 IT MI20072415
(43) Date of publication of application: 06.10.2010
(73) Proprietor: OLTRE S.R.L., 16121 Genova (IT); Torrese, Renato, 16167 Genova (GE) (IT)
(72) Inventor: TORRESE, Renato, I-16167 Genova (Genova) (IT)
(74) Representative: Forattini, Amelia
(86) International application number: PCT/EP2008/010941
(87) International publication number: WO 2009/080317

(56) References cited:
- EP-A- 0 983 917
- WO-A-90/07759
- WO-A-93/11513
- WO-A-02/096725
- WO-A-2004/037660
- DE-A1- 2 441 054
- DE-U1- 20 007 027
- FR-A- 2 134 328
- FR-A- 2 434 436
- FR-A- 2 560 131
- FR-A- 2 822 277
- GB-A- 2 399 060
- US-A- 3 594 770
- US-A- 5 568 124
- US-A1- 2004 189 466
- US-A1- 2006 152 360

## Description

The present invention relates to an anti-theft device, particularly for pallets loaded with goods.

As is known, a frequent problem in the management of the supply chain, i.e., the set of business management processes that allow to optimize the delivery of products, services and information from the supplier to the customer, is constituted by theft occurring during transport or storage of the goods.

The problem of theft can entail important costs in the general economy of a haulage company, such as for example the transport carrier.

It is also known that a considerable amount of goods is carried by means of pallets and this is the step during which many thefts occur.

A typical air freight pallet is generally made of metal, with dimensions that can vary according to the type, and the load is packaged by wrapping by means of one or more layers of film having an insulating and protective function which is transparent or not, smooth or rough, and can be further covered by what is known as a cocoon, an actual bag with a zip fastener in which the loaded pallet is inserted.

In general, a theft incident relates to a limited number of items for each pallet, i.e., the theft produces a lesion in the protective film where the lesion is large enough to allow to extract one or more items.

The aim of the present invention is to provide a system that is capable of coping with the problem of thefts.

Within the scope of this aim, the object of the invention is to provide a device that is capable of indicating that a theft has been attempted.

Another object of the invention is to provide a device that is versatile, i.e., usable in any type of pallet.

Another object is to provide a device that is intended simultaneously to detect, record and report data regarding the theft attempt.

Another object of the present invention is to provide a device which, by virtue of its particular constructive characteristics, is capable of giving the greatest assurances of reliability and safety in use.

The document FR 2 434 436 A discloses an anti-theft device according to the preamble of claim 1.

This aim, these objects and others that will become better apparent hereinafter are achieved by an anti-theft device as claimed in claim 1. Preferred embodiments are claimed in the dependent claims.

Further characteristics and advantages will become better apparent from the description of preferred but not exclusive embodiments of the invention, illustrated by way of nonlimiting example in the accompanying drawings, wherein:
Figure 1 is a schematic perspective view of an air freight pallet that is loaded and packaged;
Figure 2 is a schematic view of the device according to the invention;
Figures 3 and 4 are schematic views of the device respectively in the normal condition and in the condition of intervention due to a breach that has occurred;
Figure 5 is a constructive diagram of the device according to a first aspect of the invention;
Figure 6 is a constructive diagram of the device according to a further aspect of the invention;
Figure 7 is a schematic perspective view of an exemplary device ;
Figure 8 is a view of a portion of membrane that illustrates schematically a possible arrangement of the conductor;
Figure 9 is a perspective view of a loaded pallet provided with a device constituted by a conducting net with independent meshes, according to an example;
Figure 10 is a schematic perspective view of a pallet modified to accommodate a device according to an example;

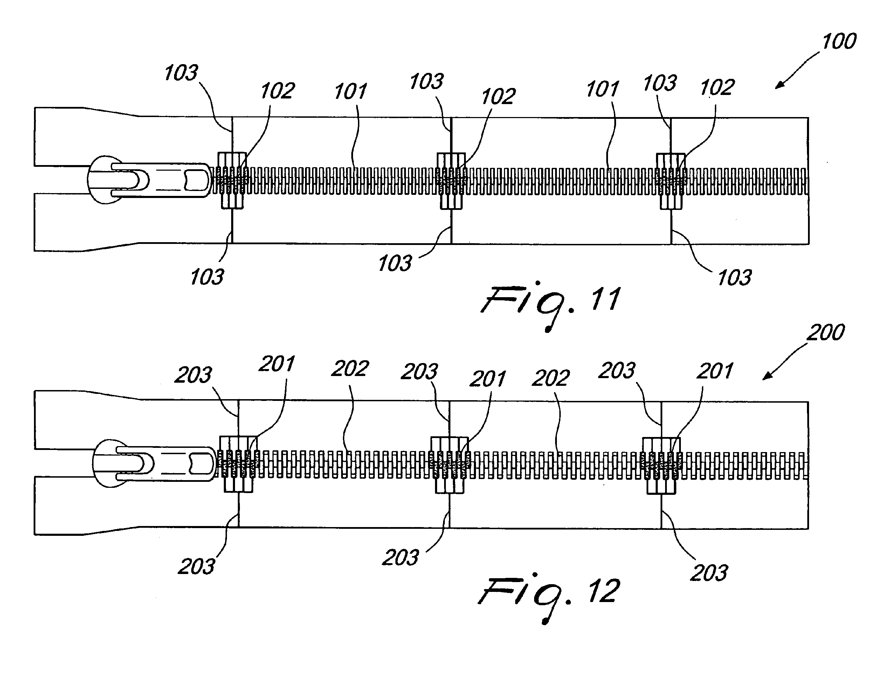

Figure 11 illustrates a zip fastener according to an example;
Figure 12 illustrates a zip fastener according to an example;

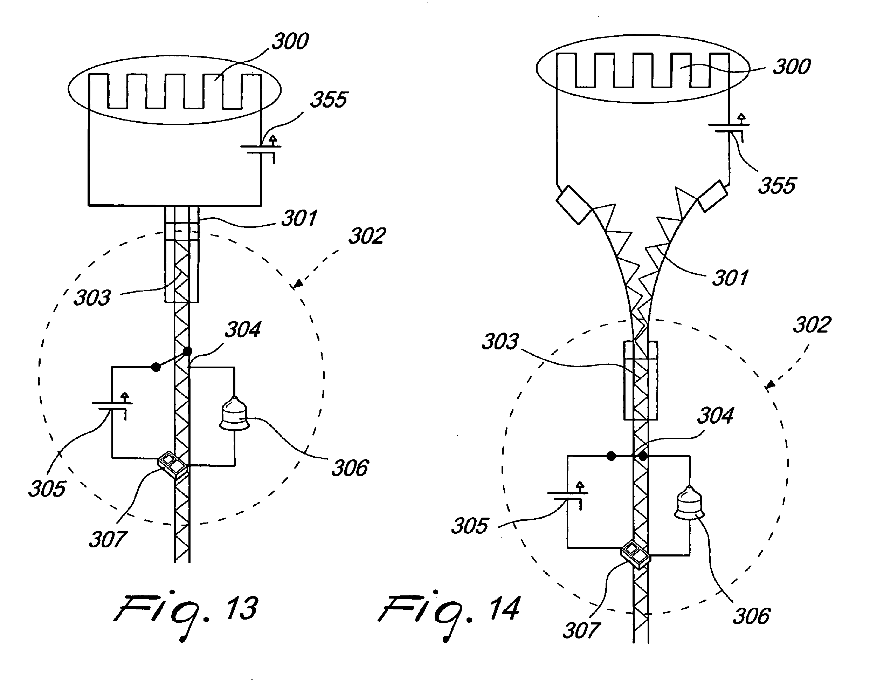

Figure 13 schematically illustrates an exemplary device as applied to a bag provided with a zip fastener;
Figure 14 schematically illustrates the device of the preceding figure when the zipper is opened;
Figure 15 schematically illustrates the implementation of the device according to an example for protecting a truck or similar.

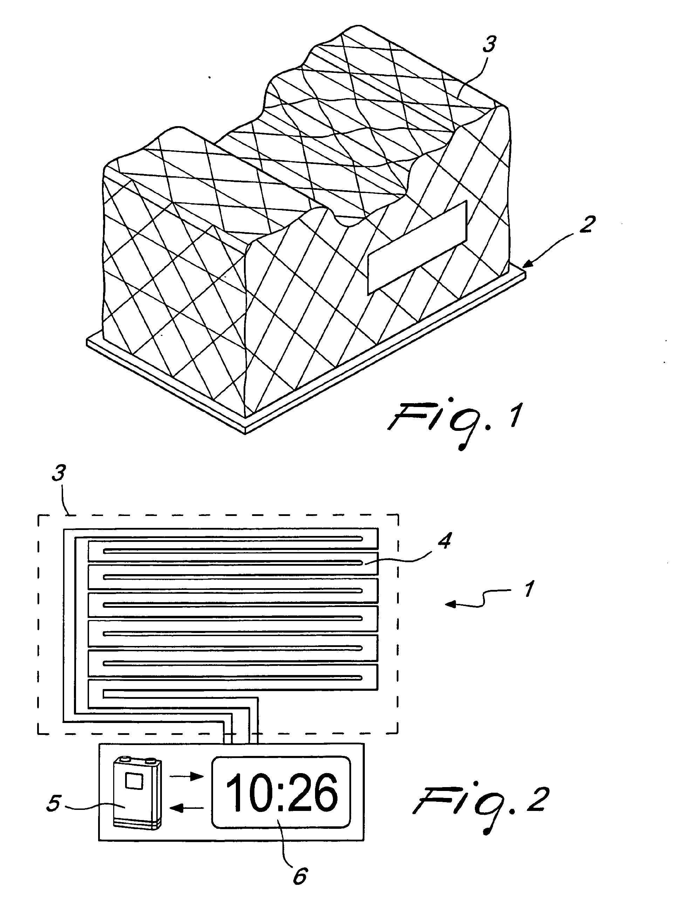

With reference to the cited figures, the device according to the invention, generally designated by the reference numeral 1, is described in its implementation to an air freight pallet 2, which is shown schematically, loaded and packaged, in Figure 1.

The device according to the present invention can be applied to any type of pallet.

The pallet 2 is generally made of metal, with dimensions that can vary according to the type.

The load is packaged by wrapping by means of one or more layers of film 3, which has an insulating and protective function and is transparent and smooth or rough.

According to the invention, a conducting path 4 surrounds the pallet 2 and is powered by a power supply 5, which generates a signal, for example an electrical signal.

The conducting path 4 is connected to a receiver 6, which is capable of detecting any interruption of the signal, as will be explained in detail hereinafter.

The conducting path 4 is coupled to the protective film 3.

This coupling can be provided in various manners: with conducting ink, with conducting paint, with conducting wire, preferably with a low thickness, with optical fibers, plastic fibers, or with any system capable of surrounding the entire packaged pallet with a conducting path.

The term "conducting" must be extended not only to the conduction of electric power but also to the conduction of any signal, such as light signals that can be transmitted by means of optical fibers.

The conducting path forms a closed circuit and any breach interrupts the circuit.

It is preferable for the circuit to have a resistance to cutting that is comparable to that of the basic material, so that the thief is unable to detect its existence in any way.

The circuit preferably has a random path, in order to make it more complicated or physically impossible to cut through it without interrupting it.

The examples shown hereinafter illustrate a conducting path that is coupled to the packaging film which has rather simple patterns because greater simplicity is equivalent to lower costs.

According to a first aspect of the invention, the receiver 6 is constituted by a timer and the power supply 5 is constituted by an ordinary dry battery that is capable of generating an electric current that flows through the circuit.

According to a first embodiment of the device, the power supply-timer circuit is activated at the time when the package is wrapped; in another embodiment, instead, the system is activated when a breach occurs.

In both cases, the power supply 5 and the timer 6 are preferably arranged in the least accessible place of the packaged pallet, such as for example the center of the pallet 2 or inside a dummy package.

In this manner, the thief might damage the timer and the power supply only by breaking down the packaged pallet completely, an operation which is more demanding, is more evident and requires more time.

The power supply 5 and the receiver 6 are preferably protected by an enclosure, such as for example a metal box, of compact size, especially in terms of thickness, which is associated with the pallet, is insulated and has a sufficient resistance to impacts.

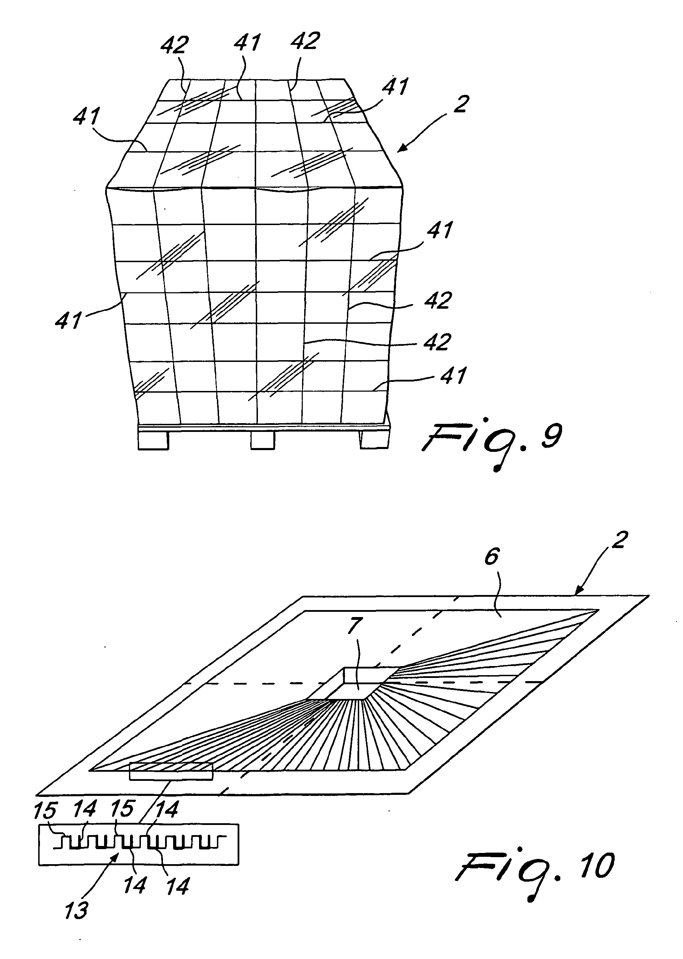

As shown schematically in Figure 10, a pallet 2 may be modified by providing a special recess 7 for accommodating the power supply 5 and the receiver 6.

If the device is provided in such a manner that the activation of the power supply-timer circuit occurs when the pallet is wrapped, if a theft has occurred the operator is able to establish how long after wrapping it occurred: the timer stops at the time at the moment when the circuit is interrupted, indicating the time of day.

If the device instead provides for activation of the system when the theft occurs, the operator who takes delivery of the pallet, for example the forwarding agent at the end of transport, can know how much earlier the theft occurred.

Reading can occur by direct inspection, i.e., the operator breaks down the pallet, opens the enclosure, which might be provided with its own lock, and personally examines the display of the timer.

Reading can also occur by means of an additional device that is capable of establishing a contact with the timer and of reading its data at relatively short distances, for example by means of a radio link.

This system allows to speed up the procedures.

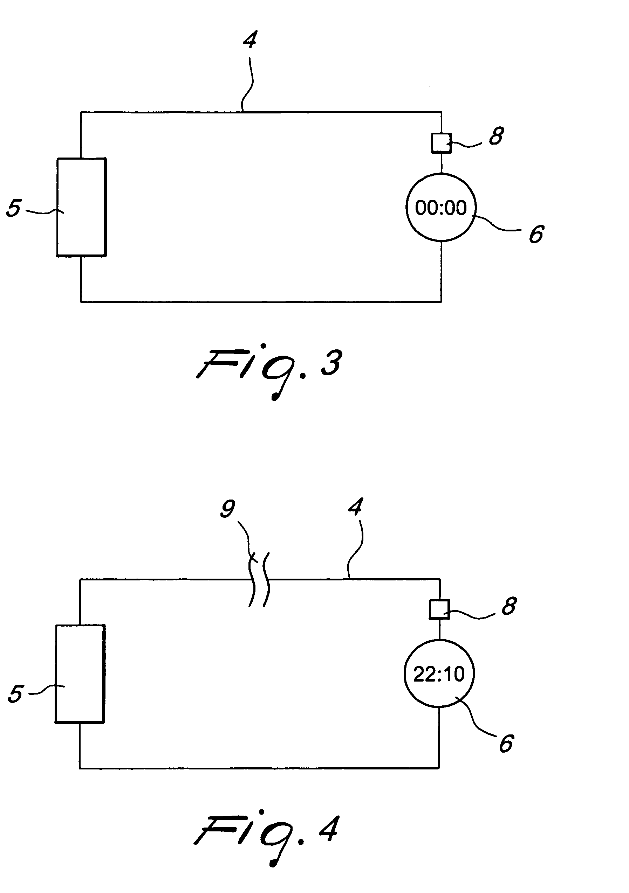

Figures 3 and 4 are schematic views of the operation of the device according to the embodiment which provides for the activation of the power supply-timer circuit at the instant when the pallet is wrapped.

In this embodiment, the device includes a switch 8 for starting the timer 6.

The timer 6 is capable of storing the time of day when the main circuit was interrupted. The interruption is designated schematically by the reference numeral 9 in Figure 4.

The timer 6 can be provided with a secondary power supply, which is activated when the primary one fails. In any case, even if the power supply is reactivated, the timer will not resume counting the time and will remain fixed on the time of day when the theft occurred.

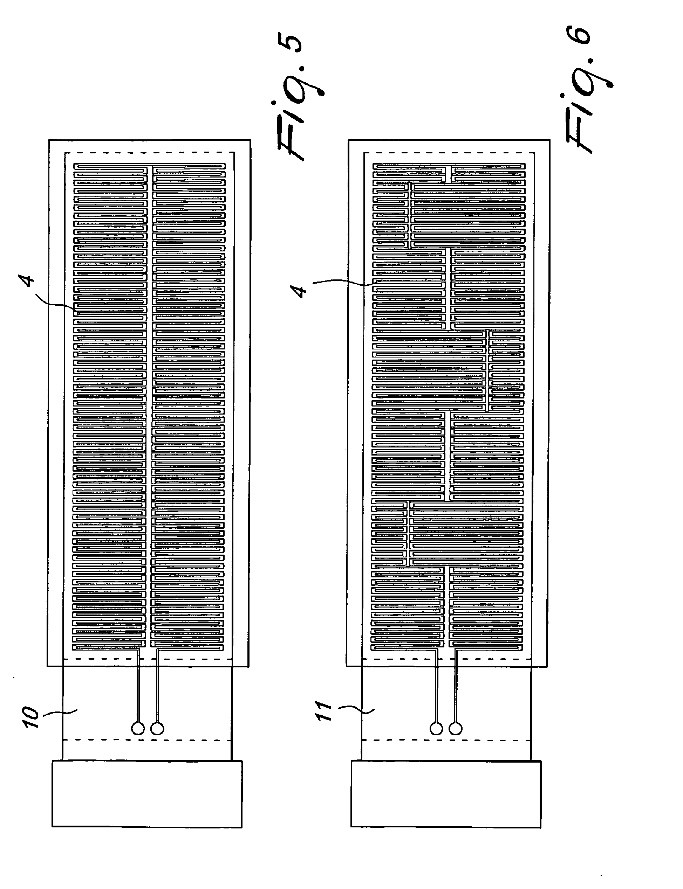

Figures 5 and 6 illustrate two embodiments of a packaging web, designated respectively by the reference numerals 10 and 11. The webs 10 and 11 are provided with two different embodiments of the coupled conducting circuit 4.

The possible measurements of the packaging film are different, and so is the design of the conducting circuit.

The thickness, width, length and degree of conductivity of the material used for coupling must ensure a power supply that is sufficient for the operation of the receiver.

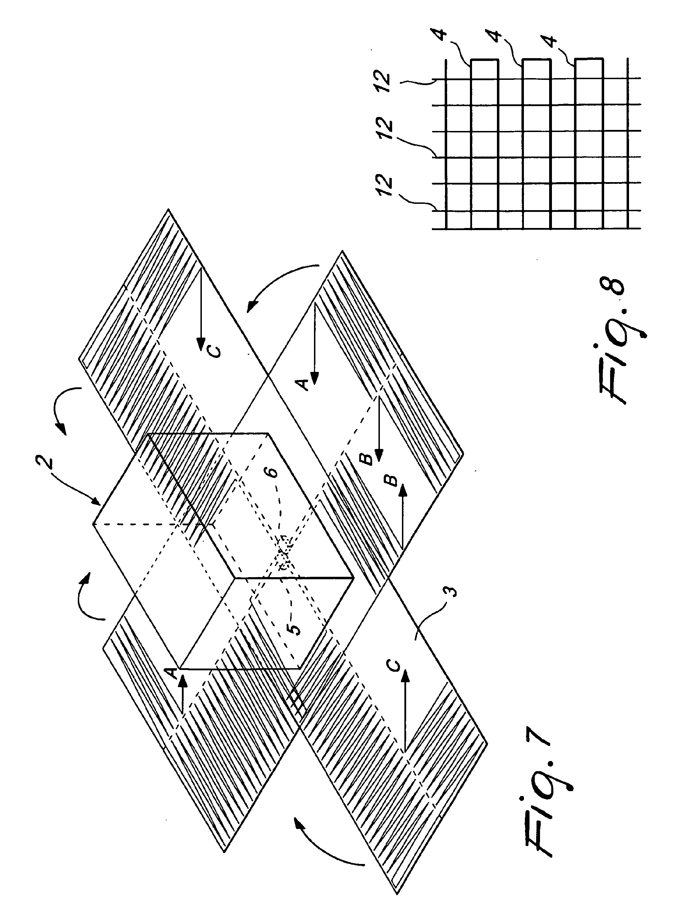

An example with independent circuits is shown schematically in Figure 7, in which the independent circuits are designated by the reference letters A, B and C.

Preferably, the conducting track is adequately insulated, for example by superimposing an insulating layer on the film.

One thus obtains a multilayer covering composed of a main film, the one to which the circuit is coupled, and a secondary one, which has insulation as its only function.

Also, the various parts will be joined by means of adapted insulating tape, better if of the two-sided type, or with an adapted adhesive or any system that bonds the overlapping flaps so that it is no longer possible to separate them.

There is a trend in standards, as regards the safety of goods transport, toward using transparent packaging.

Transparent containers already exist, and films for packaging goods transported by means of pallets also can be transparent.

Due to the fully transparent packaging, the conducting path 4 is visible externally, allowing the thief to cut the packaging in such a manner as to not interrupt the circuit.

To obviate this drawback, a lattice 12 is used which is printed on the conducting path 4 with a masking function, maintaining good visibility of the content of the pallet, as shown schematically in Figure 8.

According to a further aspect of the invention, the device can be provided with a receiver-alarm.

In this case, instead of the timer one uses an alarm, such as for example a siren. This alarm is preferably powered by a power supply that is independent of the power supply of the conducting path. The positioning of the siren in fact remains the same as that of the preceding receiver and this position might hinder the diffusion of sound; therefore, the siren has an adequate power supply of sufficient power.

According to the further aspect of the invention, the device is provided with a receiver-transmitter.

In this case, a transmitter is coupled to the receiver and has the task of warning the operator at the very moment when the theft is detected.

According to a further aspect of the invention, the device is provided with a receiver-alarm-transmitter.

This case combines the two preceding ones: in addition to an alarm on site, data transmission to the operator occurs.

According to a further aspect of the invention, the device is provided with a timer receiver without a display.

Some operators might prefer a timer without display, for example with an internal memory that can be downloaded by means of a wired connection, for example a USB port, radio link or similar system. This would allow to save on the cost of the display in the case of the production of a large number of units.

In the embodiments described above, the conducting path is in the form of a circuit in which the meshes never overlap, no matter how complex and articulated their path.

According to an example, the conducting path can be constituted by a circuit with overlapping meshes, similar to a net, in which a first layer of meshes 41, for example horizontal ones, is isolated from a second layer of vertical meshes 42.

Figure 9 schematically illustrates such an example which, differently from the embodiment of Figure 8, does not require concealment systems. According to this example, there is a single circuit, which forms a conducting net that wraps around the entire pallet and is capable of detecting any theft, even one characterized by an incision that is aimed at not interrupting the circuit.

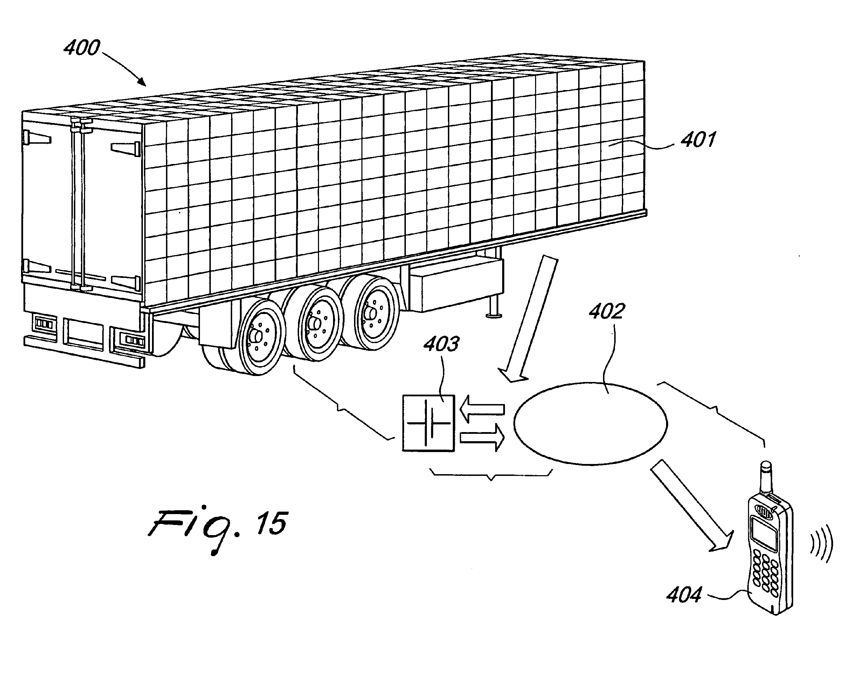

Figure 15 schematically illustrates the implementation of the device according to an example for protecting a truck or similar.

The truck or trailer 400 is covered by a conductive path 401 and comprises a receiver 402 and a power supply 403.

The receiver 402 is adapted to detect a theft attempt, as described above, and may be operatively associated with an alarm, a transponder, such as a GPS device, or other device adapted to send a signal when a theft is attempted.

The signal may be a signal adapted to be received by a receiver 404, such as cell phone or similar.

In practice it has been found that the invention achieves the intended aim and objects, providing a device that is capable of reporting a theft or an attempted theft of a loaded pallet.

The device according to the invention is suitable in particular to send a signal to a receiver when the thief produces a lesion in the loaded pallet to remove one or more items.

Therefore, this is not merely an antitheft device, but a system which, depending on the manner of its embodiment, can also have an antitheft function.

The anti-theft device according to the present invention is constituted also by the provision of a lattice that is not conducting and imitates the conducting one, so as to confuse any thieves.

Once the anti-theft device according to the present invention has become known, the thief in fact might be discouraged by the presence of a grid printed on the canvas of the pallet, being induced to believe the device is actually present.

## Claims

1. An anti-theft device (1) particularly for pallets loaded with goods, comprising a conducting path (4) that surrounds a pallet (2) and is powered by a power supply (5) that generates a signal, such as an electrical signal; said conducting path (4) is connected to a receiver (6) that is capable of detecting any interruption of the signal in case of theft; said conducting path (4) being coupled to a transparent protective film (3) that surrounds said pallet (2), said anti-theft device (1) being **characterized in that** a non conducting lattice is printed on said film (3) overlapping and masking said conducting path (4).

2. The device (1) according to claim 1, **characterized in that** said conductive path (4) constitutes a single circuit that surrounds the entire pallet (2), said conductive path (4) is a conductive ink or paint coupled to said film (3).

3. The device (1) according to claim 1, **characterized in that** said conducting path (4) is made of a material whose cutting resistance is comparable to that of the material of the protective film (3).

4. The device (1) according to claim 2, **characterized in that** a timer constitutes said receiver (6) and said power supply (5) is constituted by an ordinary dry battery.

5. The device (1) according to one or more of the preceding claims, **characterized in that** said pallet (2) has a recess for accommodating said power supply (5) and said receiver (6).

6. The device (1) according to claim 4, **characterized in that** said power supply-timer circuit (5, 6) is adapted to be activated when said pallet (2) is wrapped, wherein the timer is adapted to stop at the time when the circuit is interrupted, indicating the time of day.

7. The device (1) according to the preceding claim, **characterized in that** it comprises an additional device capable of establishing contact with said timer (6) and of reading the data of said timer (6) from relatively short distances, for example by means of a radio link.

8. The device (1) according to claim 6, **characterized in that** said timer (6) comprises a secondary power supply that is activated when said primary power supply fails.

9. The device (1) according to one or more of the preceding claims, **characterized in that** said film (3) is in the form of a wrapping roll, which is provided with various embodiments of coupled conducting circuit.

10. The device (1) according to one or more of the preceding claims, **characterized in that** said conducting path (4) is insulated by overlapping an insulating layer over said film (3).

11. The device (1) according to claim 2 and one or more of the preceding claims, **characterized in that** it comprises a multilayer covering that is composed of a main film (3), the one with which the circuit is coupled, and a secondary film, whose only function is insulation.

12. The device (1) according to one or more of the preceding claims, **characterized in that** it comprises a receiver-transmitter.

13. The device (1) according to one or more of the preceding claims, characterized that it comprises a receiver-alarm-transmitter.

14. The device (1) according to one or more of the preceding claims, **characterized in that** it comprises a timer receiver without a display and comprises an internal memory which is downloaded by means of a wired connection, such as a USB port, or a radio link .

## Patentansprüche

1. Diebstahlsicherungseinrichtung (1) insbesondere für mit Waren beladene Paletten, umfassend: einen leitenden Pfad (4), der eine Palette (2) umgibt und durch eine Stromversorgung (5) versorgt ist, die ein Signal, wie etwa ein elektrisches Signal, erzeugt; wobei der leitende Pfad (4) mit einem Empfänger (6) verbunden ist, der jegliche Unterbrechung des Signals im Fall von Diebstahl detektieren kann; wobei der leitende Pfad (4) mit einem transparenten Schutzfilm (3) gekoppelt ist, der die Palette (2) umgibt, wobei die Diebstahlsicherungseinrichtung (1) **dadurch gekennzeichnet ist, dass** ein nichtleitendes Gitter auf den Film (3) gedruckt ist, das den leitenden Pfad (4) überlappt und maskiert.

2. Einrichtung (1) nach Anspruch 1, **dadurch gekennzeichnet, dass** der leitfähige Pfad (4) einen einzigen Schaltkreis bildet, der die gesamte Palette (2) umgibt, wobei der leitfähige Pfad (4) eine mit dem Film (3) gekoppelte leitfähige Tinte oder Farbe ist.

3. Einrichtung (1) nach Anspruch 1, **dadurch gekennzeichnet, dass** der leitende Pfad (4) aus einem Material besteht, dessen Schneidwiderstand mit dem des Materials des Schutzfilms (3) vergleichbar ist.

4. Einrichtung (1) nach Anspruch 2, **dadurch gekennzeichnet, dass** ein Timer den Empfänger (6) bildet und die Stromversorgung (5) durch eine gewöhnliche Trockenbatterie gebildet ist.

5. Einrichtung (1) nach einem oder mehreren der vorhergehenden Ansprüche, **dadurch gekennzeichnet, dass** die Palette (2) eine Aussparung zum Unterbringen der Stromversorgung (5) und des Empfängers (6) aufweist.

6. Einrichtung (1) nach Anspruch 4, **dadurch gekennzeichnet, dass** die Stromversorgungs-Timerschaltung (5, 6) dafür ausgelegt ist, aktiviert zu werden, wenn die Palette (2) eingewickelt wird, wobei der Timer dafür ausgelegt ist, zu dem Zeitpunkt, wenn der Schaltkreis unterbrochen wird, zu stoppen, wodurch die Tageszeit angezeigt wird.

7. Einrichtung (1) nach dem vorhergehenden Anspruch, **dadurch gekennzeichnet, dass** sie eine zusätzliche Einrichtung umfasst, die Kontakt mit dem Timer (6) herstellen und die Daten des Timers (6) aus relativ kurzen Distanzen lesen kann, zum Beispiel mittels einer Funkverbindung.

8. Einrichtung (1) nach Anspruch 6, **dadurch gekennzeichnet, dass** der Timer (6) eine Sekundärstromversorgung umfasst, die aktiviert wird, wenn die Primärstromversorgung ausfällt.

9. Einrichtung (1) nach einem oder mehreren der vorhergehenden Ansprüche, **dadurch gekennzeichnet, dass** der Film (3) in Form einer Verpackungsrolle vorliegt, die mit verschiedenen Ausführungsformen eines gekoppelten leitenden Schaltkreises versehen ist.

10. Einrichtung (1) nach einem oder mehreren der vorhergehenden Ansprüche, **dadurch gekennzeichnet, dass** der leitende Pfad (4) durch Überlappen einer isolierenden Schicht über dem Film (3) isoliert ist.

11. Einrichtung (1) nach Anspruch 2 und einem oder mehreren der vorhergehenden Ansprüche, **dadurch gekennzeichnet, dass** sie eine mehrschichtige Bedeckung umfasst, die aus einem Hauptfilm (3), dem, mit dem der Schaltkreis gekoppelt ist, und einem Sekundärfilm, dessen einzige Funktion Isolation ist, zusammengesetzt ist.

12. Einrichtung (1) nach einem oder mehreren der vorhergehenden Ansprüche, **dadurch gekennzeichnet, dass** sie einen Empfänger-Sender umfasst.

13. Einrichtung (1) nach einem oder mehreren der vorhergehenden Ansprüche, **dadurch gekennzeichnet, dass** sie einen Empfänger-Alarm-Sender umfasst.

14. Einrichtung (1) nach einem oder mehreren der vorhergehenden Ansprüche, **dadurch gekennzeichnet, dass** sie einen Timer-Empfänger ohne Display umfasst und einen internen Speicher umfasst, der mittels einer verdrahteten Verbindung, wie etwa eines USB-Ports oder einer Funkverbindung heruntergeladen wird.

## Revendications

1. Dispositif antivol (1), particulièrement pour des palettes chargées de marchandises, comprenant un trajet conducteur (4) qui entoure une palette (2) et qui est alimenté par une alimentation (5) qui génère un signal, tel qu'un signal électrique; ledit trajet conducteur (4) est connecté à un récepteur (6) qui est capable de détecter toute interruption du signal dans le cas d'un vol; ledit trajet conducteur (4) étant couplé à un film de protection transparent (3) qui entoure ladite palette (2); ledit dispositif antivol (1) étant **caractérisé en ce qu'**un réseau non conducteur est imprimé sur ledit film (3) recouvrant et masquant ledit trajet conducteur (4).

2. Dispositif (1) selon la revendication 1, **caractérisé en ce que** ledit trajet conducteur (4) constitue un circuit unique qui entoure la palette (2) entière, et ledit trajet conducteur (4) est une encre ou une peinture conductrice couplée audit film (3).

3. Dispositif (1) selon la revendication 1, **caractérisé en ce que** ledit trajet conducteur (4) est constitué d'un matériau dont la résistance à la coupe est comparable à celle du matériau du film de protection (3).

4. Dispositif (1) selon la revendication 2, **caractérisé en ce qu'**un registre d'horloge constitue ledit récepteur (6) et ladite alimentation (5) est constituée par une pile sèche ordinaire.

5. Dispositif (1) selon une ou plusieurs des revendications précédentes, **caractérisé en ce que** ladite palette (2) comporte un évidement pour recevoir ladite alimentation (5) et ledit récepteur (6).

6. Dispositif (1) selon la revendication 4, **caractérisé en ce que** ledit circuit alimentation-registre d'horloge (5, 6) est conçu pour être activé lorsque ladite palette (2) est enveloppée, dans lequel le registre d'horloge est conçu pour s'arrêter à l'instant où le circuit est interrompu, indiquant l'heure.

7. Dispositif (1) selon la revendication précédente, **caractérisé en ce qu'**il comprend un dispositif supplémentaire capable d'établir un contact avec ledit registre d'horloge (6) et de lire les données dudit registre d'horloge (6) à des distances relativement courtes, par exemple au moyen d'une liaison radio.

8. Dispositif (1) selon la revendication 6, **caractérisé en ce que** ledit registre d'horloge (6) comprend une alimentation secondaire qui est activée lorsque ladite alimentation principale est défaillante.

9. Dispositif (1) selon une ou plusieurs des revendications précédentes, **caractérisé en ce que** ledit film (3) a la forme d'un rouleau d'emballage, qui est pourvu de divers modes de réalisation de circuit conducteur couplé.

10. Dispositif (1) selon une ou plusieurs des revendications précédentes, caractérisé en ce ledit trajet conducteur (4) est isolé en superposant une couche isolante audit film (3).

11. Dispositif (1) selon la revendication 2 et une ou plusieurs des revendications précédentes, **caractérisé en ce qu'**il comprend un revêtement multicouche qui est composé d'un film principal (3), celui auquel le circuit est couplé, et d'un film secondaire, dont la seule fonction est l'isolement.

12. Dispositif (1) selon une ou plusieurs des revendications précédentes, **caractérisé en ce qu'**il comprend un récepteur-émetteur.

13. Dispositif (1) selon une ou plusieurs des revendications précédentes, **caractérisé en ce qu'**il comprend un récepteur-alarme-émetteur.

14. Dispositif (1) selon une ou plusieurs des revendications précédentes, **caractérisé en ce qu'**il comprend un récepteur de registre d'horloge sans afficheur et comprend une mémoire interne qui est téléchargée au moyen d'une connexion câblée, telle qu'un port USB, ou une liaison radio.
